# EUROPEAN PATENT SPECIFICATION

(11) **EP 2 005 039 B1**
(45) Date of publication and mention of the grant of the patent: **05.05.2010**
(21) Application number: 07716108.1
(22) Date of filing: 09.03.2007
(51) Int. Cl.: F16H 63/20, F16H 63/30

(54) **GEARBOX FOR A MOTOR VEHICLE**
GETRIEBE FÜR KRAFTFAHRZEUG
BOITE DE VITESSES POUR VEHICULE A MOTEUR

(30) Priority: 17.03.2006 SE 0600609
(43) Date of publication of application: 24.12.2008
(73) Proprietor: Scania CV AB, 151 87 Södertälje (SE)
(72) Inventor: TRÄFF, Johan, S-15139 Södertälje (SE)
(74) Representative: Waldebäck, Hans Olov
(86) International application number: PCT/SE2007/050135
(87) International publication number: WO 2007/108759

(56) References cited:
- EP-A2- 1 134 461
- WO-A-2005/121604
- DE-A1- 4 115 675
- FR-A1- 2 762 659
- US-A- 4 532 823
- US-A1- 2003 134 706

## Description

### Technical field

The present invention relates to a transmission device for a motor vehicle according to the preamble of the independent claim directed towards a transmission device, and to a motor vehicle provided with such a transmission device.

### Description of state of the art

Motor vehicles are mostly equipped with transmission devices such as gearboxes, differential locks and transfer gearboxes. A commonly occurring type of transmission device is gearwheel gearboxes which usually comprise a housing with a mainshaft and a countershaft which are arranged parallel with one another. The mainshaft comprises an input shaft and a primary shaft which are arranged to be rotatable relative to one another. An input shaft is connected to the engine via a clutch, and a gearwheel arranged on the input shaft drives a gearwheel arranged on the countershaft. A plurality of gearwheels arranged in mutual engagement in pairs are arranged on the primary shaft and the countershaft. The gearwheels on the primary shaft are arranged to be lockable relative to the primary shaft. The ratio between the primary shaft and the countershaft depends on which gearwheel is locked relative to the primary shaft. A gear control device in the gearwheel gearbox is arranged to enable gearwheels to be locked firmly on the primary shaft. It is possible, by means of a gear shift connected to the gear control device, to change the gearwheel which is to be locked relative to the primary shaft.

Today's gearboxes often comprise a cast casing in which the shafts are arranged. An example of such a gearbox is described in American patent 5,284,067. An alternative gearbox is described in Swedish patent application 0401458-5 (also published under WO-A-2005/121604), which describes a gearbox comprising an extruded casing with two endwalls which are held together by rods running through the two endwalls, and which represents the closest prior art to the subject-matter of claim 1.

The gear control devices in today's gearboxes are relatively complicated mechanical devices which are relatively expensive to make. There is a need for a transmission device for a vehicle in which the gear control device is easier to make than today's transmission devices.

### Summary of the invention

One object of the present invention is to provide an alternative to known transmission devices for motor vehicles.

Another object of the present invention is to provide a transmission device in which the gearshift device is easier to make than in today's gearboxes.

A further object of the present invention is to provide a motor vehicle which has a transmission device in which the gearshift device is easier to make than in today's s gearboxes.

At least one of these objects is achieved with a transmission device according to the attached independent claim 1 and a motor vehicle according to attached claim 16.

Further advantages of the invention are achieved with the features in the dependent claims.

A transmission device according to the invention for a motor vehicle comprises a casing, a first endwall and a second endwall, a mainshaft which is supported in the endwalls, which runs through at least one of the endwalls and on which a first primary gearwheel and a second primary gearwheel are arranged. The transmission device further comprises a first locking means adapted to locking the first primary gearwheel relative to the mainshaft, and a second locking means adapted to locking the second primary gearwheel relative to the mainshaft. The transmission device also comprises a countershaft which is supported in the endwalls and on which are arranged at least a first countershaft gearwheel meshing with the first primary gearwheel, a second countershaft gearwheel meshing with the second primary gearwheel, and a gearshift device for operating the first locking means and the second locking means. The transmission device is characterised in that it comprises a gearshift shaft and that the gearshift device comprises at least a first tubular shaft so arranged as to surround the gearshift shaft and be movable along the gearshift shaft, and a first connecting means, arranged between the first locking means and the first tubular shaft, for operating the first locking means, and a second tubular shaft so arranged as to surround the first tubular shaft and be movable along the gearshift shaft relative to the first tubular shaft and the gearshift shaft, and a second connecting means, arranged between the second locking means and the second tubular shaft, for operating the second locking means.

In a transmission device according to the invention, the gearshift device is easier to make than in transmission devices according to the state of the art. The gearshift device can be assembled before the transmission device is assembled and be easy to put in place substantially assembled within the casing. Substantially the only requirement for placing the gearshift device in position in the transmission device is brackets in the endwalls for the gearshift shaft.

At least one of the locking means may be so arranged as to surround the mainshaft and be movable relative to the mainshaft between a first position in which the locking means is connected both to the primary gearwheel which the locking means is adapted to locking and to the mainshaft, and a second position in which the locking means is only connected to the mainshaft. It is advantageous to have at least one of the locking means arranged in said manner, since this results in a compact transmission device.

Each of said locking means surrounding the mainshaft may comprise a rotationally symmetrical groove arranged concentrically with the mainshaft. The locking means may then be so arranged that it accompanies the rotation of the mainshaft but is movable along the mainshaft, while at the same time the connecting means may be arranged to act upon the locking means on the sides of the rotationally symmetrical groove.

In cases where the locking means comprises a rotationally symmetrical groove, each of the connecting means may have a fork-shaped end portion engaging with the rotationally symmetrical groove on the locking means to which the connecting means is connected. The fact that the connecting means has a fork-shaped end portion results in a large surface which can act upon the walls of the rotationally symmetrical groove.

In a transmission device according to the invention, the first connecting means may be arranged firmly in the first tubular shaft, and the second connecting means may be arranged firmly in the second tubular shaft. This is a relatively uncomplicated solution which is relatively easy to make. It is of course possible to arrange the connecting means to be more or less movable in the tubular shafts. It is also possible to arrange for either the first or the second connecting means to be fixed relative to the first tubular shaft or the second tubular shaft.

The mainshaft and the countershaft may be arranged substantially parallel with one another. This is advantageous in that it is relatively easy to make gearwheels for such shafts. It is nevertheless possible to arrange the mainshaft and the countershaft at an angle to one another.

In a manner corresponding to that of the mainshaft and the countershaft, the mainshaft and the gearshift shaft may be arranged substantially parallel with one another. This is advantageous in that it is relatively easy to make gearwheels for such shafts. It is nevertheless possible to arrange the mainshaft and the gearshift shaft at an angle to one another.

The first tubular shaft may have a larger extent along the longitudinal axis of the gearshift shaft than the second tubular shaft. This is advantageous in making it easier to arrange connecting means on the first tubular shaft and the second tubular shaft.

There are a number of different ways of effecting the movement of the first tubular shaft and the second tubular shaft and the relating connecting means. The transmission device may comprise a first actuating means adapted to moving the first tubular shaft and a second actuating means adapted to moving the second tubular shaft.

The aforesaid actuating means may be selected from the group comprising electrical actuating means, pneumatic actuating means, electromagnetic actuating means and hydraulic actuating means.

As an alternative to the aforesaid actuating means, the transmission device may comprise a mechanical transmission unit adapted to transmitting the motion of the tubular shafts to a control means situated on the outside of the transmission device. In transmission devices according to the state of the art there are a plurality of different kinds of mechanical transmission units usable in a transmission device according to the invention.

The mainshaft may comprise an input shaft with at least one input gearwheel meshing with a countershaft gearwheel on the countershaft, and a primary shaft on which primary gearwheels are arranged. The input shaft is with advantage intended to connect the driving power to the transmission device, and a compact transmission device will be achieved by arranging it on the mainshaft together with the primary shaft.

The endwalls may take the form of separate parts from the casing, and the transmission device may comprise a fastening means adapted to acting upon the distal surfaces of the endwalls with a force relative to one another along the longitudinal axis inwards towards the casing. This is advantageous in that the casing can then be made by extrusion. The gearshift shaft may take the form of said fastening means.

The tubular shafts may be arranged to abut directly against one another but may also comprise plain bearings arranged on the inside of the tubular shafts. With plain bearings it will be easier to achieve low friction between the first tubular shaft and the gearshift shaft and between the second tubular shaft and the first tubular shaft.

Preferred embodiments of the invention are described below with reference to the attached drawings.

### Brief description of the drawings

Fig. 1 depicts a motor vehicle with a transmission device according to an embodiment of the present invention.
Fig. 2 depicts in section a transmission device according to a first embodiment of the invention.
Fig. 3 depicts in larger detail part of the gearshift device in the transmission device in Fig. 2.
Fig. 4 depicts in larger detail part of a connecting device and a locking means in a gearshift device according to the invention.
Fig. 5 depicts a transmission device according to a second embodiment of the present invention, which transmission device comprises a mechanical transmission unit adapted to acting upon the gearshift device.

### Description of preferred embodiments of the invention

In the following description of preferred embodiments of the invention, similar parts in the various diagrams are given the same reference notation.

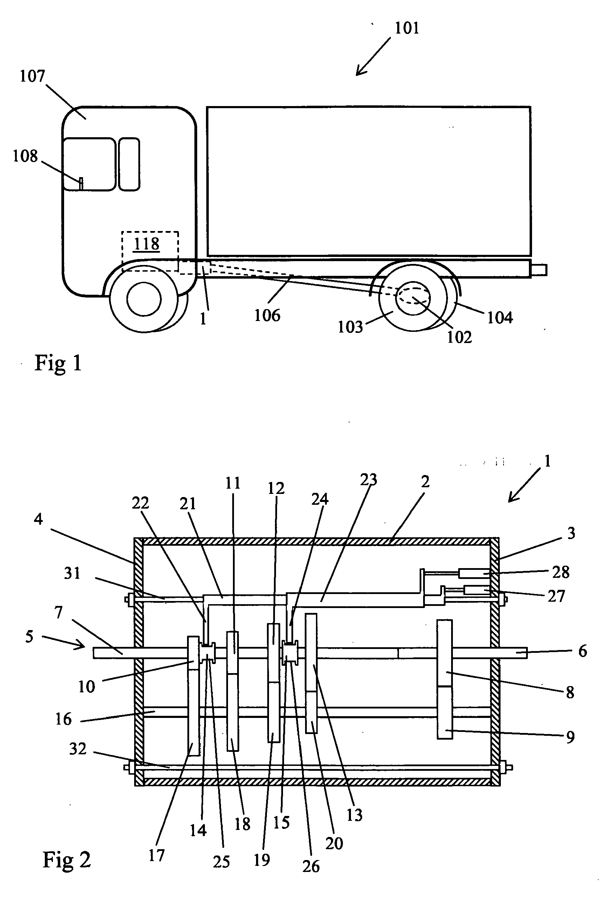

Fig. 1 depicts a motor vehicle 101 with a transmission device 1 according to an embodiment of the present invention. The motor vehicle 101 comprises a first powered wheel 103 and a second powered wheel 104 which are adapted to being powered by a differential gear 102. The motor vehicle 101 further comprises an engine 118, a transmission device 1 connected to the engine 118, and a universal shaft 106 arranged between the transmission device 1 and the differential gear 102. The motor vehicle 101 also comprises a driving cab 107 inside which a control unit 108 for operating the transmission device 1 is arranged.

Fig. 2 depicts in section a transmission device 1 according to a first embodiment of the invention. The transmission device 1 comprises a casing 2, a first endwall 3 and a second endwall 4. A mainshaft 5 is supported in the first endwall 3 and in the second endwall 4. The mainshaft 5 comprises an input shaft 6 and a primary shaft 7 which are rotatable relative to one another. An input gearwheel 8 meshing with an input countershaft gearwheel 9 is arranged on the input shaft 6. A first primary gearwheel 10, a second primary gearwheel 11, a third primary gearwheel 12 and a fourth primary gearwheel 13 are arranged on the primary shaft 7. Also arranged on the primary shaft 7 are a first locking means 14 adapted to locking the first primary gearwheel 10 or the second primary gearwheel 11 relative to the primary shaft 7, and a second locking means 15 adapted to locking the third primary gearwheel or the fourth primary gearwheel 13 relative to the primary shaft 7. The first primary gearwheel 10 and the second primary gearwheel 11 are locked and unlocked relative to the primary shaft 7 by the first locking means 14 being moved to a first position in engagement with the first primary gearwheel 10, as depicted in Fig. 2. The first primary gearwheel 10 and the second primary gearwheel 11 are unlocked from the primary shaft 7 by the first locking means 14 being moved to a second position in which both gearwheels are unlocked from the shaft. The second primary gearwheel 11 is locked relative to the primary shaft 7 by the first locking means 14 being moved to a third position in engagement with the second primary gearwheel 11. The third and fourth primary gearwheels may be locked to the mainshaft in a corresponding manner by movement of the second locking means 15. The transmission device 1 also comprises a countershaft 16 on which are arranged a first countershaft gearwheel 17 meshing with the first primary gearwheel 10, a second countershaft gearwheel 18 meshing with the second primary gearwheel 11, a third countershaft gearwheel 19 meshing with the third primary gearwheel 12, and a fourth countershaft gearwheel 20 meshing with the fourth primary gearwheel 13. All of the primary gearwheels are locked to the countershaft 16. The ratio between the input shaft 6 and the primary shaft 7 depends on which of the primary gearwheels is locked to the primary shaft. When the first primary gearwheel 10 is locked to the shaft, as depicted in Fig. 2, the driving power from the input shaft 6 will be transmitted to the primary shaft via the input gearwheel 8, the input countershaft gearwheel 9, the first countershaft gearwheel 17 and the first primary gearwheel 10. The ratio between the input shaft and the primary shaft will thus depend on the proportion between the number of teeth on the input gearwheel 8 and the input countershaft gearwheel 9 and the proportion between the number of teeth on the first countershaft gearwheel 17 and the first primary gearwheel 10. The first endwall 3 and the second endwall 4 are held firmly against the casing by a first fastening means in the form of a gearshift shaft 31 and a second fastening means in the form of a through-shaft 32.

The transmission device 1 comprises the gearshift device for operating the first locking means 14 and the second locking means 15. The gearshift device comprises a first tubular shaft 21 so arranged as to surround the gearshift shaft 31 and be movable along the gearshift shaft 31, and a first connecting means 22, arranged between the first locking means 14 and the first tubular shaft 21, for operating the first locking means 14. The gearshift device comprises also a second tubular shaft 23 so arranged as to surround the first tubular shaft 21 and be movable along the gearshift shaft 31 relative to the first tubular shaft 21 and the gearshift shaft 31, and a second connecting means 24, arranged between the second locking means 15 and the second tubular shaft 23, for operating the second locking means 15. The first locking means 14 comprises a first rotationally symmetrical groove 25 with which the first connecting means 22 engages. The second locking means 15 comprises a second rotationally symmetrical groove 26 with which the second connecting means 24 engages. The locking means 14, 15 are with advantage designed according to the state of the art and the locking means and/or the primary gearwheels are with advantage provided with synchronising devices (not depicted) according to the state of the art so that engagement of the primary gearwheels 10, 11, 12, 13 can be effected during operation of the transmission device.

In the embodiment depicted in Fig. 2, the mainshaft 5, the countershaft 16 and the gearshift shaft 31 are arranged parallel with one another. The transmission device 1 comprises also a first hydraulic piston 27 connected to the first tubular shaft 21, and a second hydraulic piston 28 connected to the second tubular shaft 23.

When the transmission device is in operation, an engine is connected to the input shaft 6, and powered wheels (not depicted) are connected to the primary shaft 7. When a driver of the vehicle wishes to engage the powered wheels, he/she will operate the control unit 108, e.g. so that the first hydraulic piston 27 moves the first tubular shaft 21 towards the second endwall 4, with the result that the first primary gearwheel becomes locked relative to the primary shaft 7. When the driver wishes to change the gear ratio, he/she will operate the control unit 108, e.g. so that the first hydraulic piston 27 moves the first tubular shaft 21 towards the first endwall 3, with the result that the first primary gearwheel moves to the second position unlocked from the primary shaft, and the second hydraulic piston 28 thereafter pushes the second tubular shaft 23 towards the second endwall so that the third primary gearwheel 12 is locked relative to the primary shaft 7.

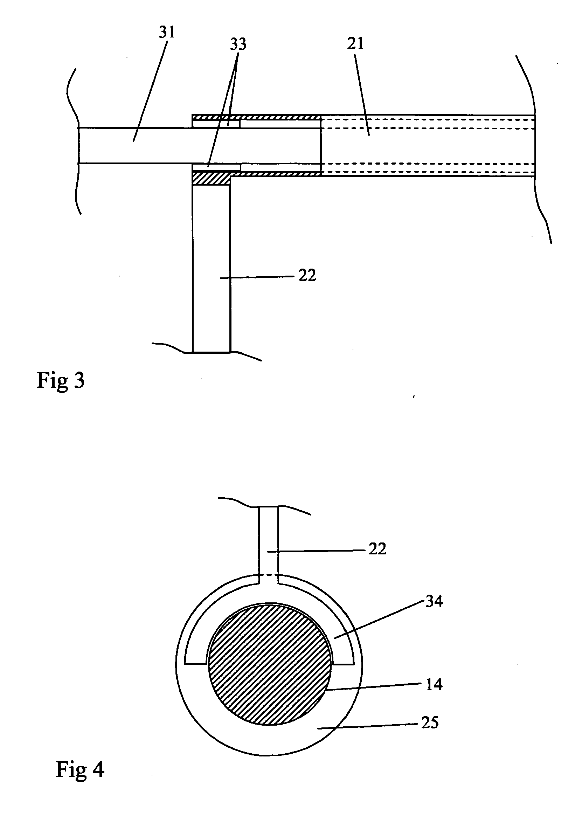

Fig. 3 depicts in larger detail part of the gearshift device in the transmission device in Fig. 1, showing the first tubular shaft 21 surrounding the gearshift shaft 31. Plain bearings 33 are arranged on the inside of the first tubular shaft. The first connecting means 22 is arranged firmly in the first tubular shaft 21.

Fig. 4 depicts in larger detail part of a connecting device 22 and a locking means 14 in a gearshift device according to the invention. The connecting device 22 has a fork-shaped end portion 34 which engages with the first rotationally symmetrical groove 25 in the locking means 14.

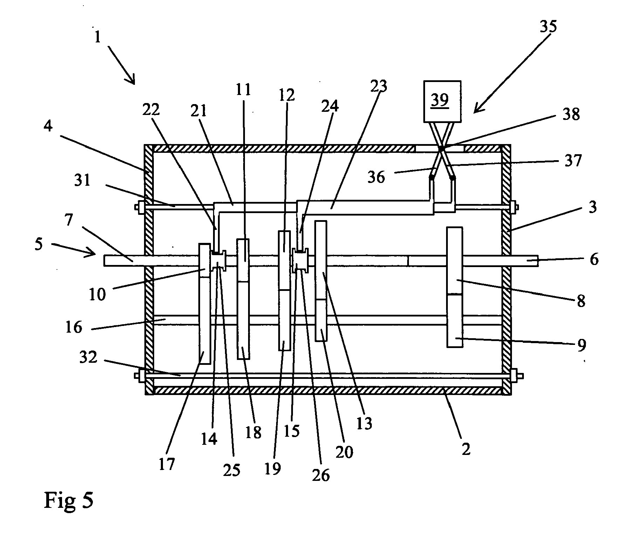

Fig. 5 depicts a transmission device 1 according to a second embodiment of the present invention, which transmission device comprises a mechanical transmission unit 35 adapted to acting upon the gearshift device. The mechanical transmission unit comprises a first arm 36 which has its first end fastened in the first tubular shaft 21 and its second end arranged outside the transmission device's casing 2, and a second arm 37 which has its first end fastened in the second tubular shaft 23 and its second end arranged outside the transmission device's casing 2. The first arm 36 and the second arm 37 are adapted to being rotatable about a common rotation spindle 38.

A control means 39 is connected to the second ends of the arms 36, 37. By operating the control means 39 it is possible to act upon the locking means 14, 15. Fig. 5 merely depicts the control means as a rectangle, but one skilled in the art can easily implement the control means 39 in any of a plurality of different ways.

The embodiments described may be modified in many ways without departing from the scope of the invention, which is only limited by the claims.

It is for example possible to dispense with arranging synchronising devices on the locking means and/or the primary gearwheels.

It is possible to arrange a transmission device according to the invention with only two primary gearwheels.

## Claims

1. A transmission device (1) for a motor vehicle (101) comprising
a casing (2), a first endwall (3) and a second endwall (4),
a mainshaft (5) which is supported in the endwalls (3, 4), which runs through at least one of the endwalls (3, 4) and on which a first primary gearwheel (10) and a third primary gearwheel (12) are arranged,
a first locking means (14) adapted to locking the first primary gearwheel (10) relative to the mainshaft (5),
a second locking means (15) adapted to locking the third primary gearwheel (12) relative to the mainshaft (5),
a countershaft (16) which is supported in the endwalls and on which at least a first countershaft gearwheel (17) meshing with the first primary gearwheel (10), and a third countershaft gearwheel (19) meshing with the third primary gearwheel (12) are arranged,
a gearshift device for operating the first locking means (14) and the second locking means (15),
wherein the transmission device comprises a gearshift shaft (31) and the gearshift device comprises at least
a first tubular shaft (21) so arranged as to surround the gearshift shaft and be movable along the gearshift shaft (31), and a first connecting means (22), arranged between the first locking means (14) and the first tubular shaft (21), for operating the first locking means (14), **characterised by**
a second tubular shaft (23) so arranged as to enclose the first tubular shaft (21) and be movable along the gearshift shaft (31) relative to the first tubular shaft (21) and
the gearshift shaft (31), and a second connecting means (24), arranged between the second locking means (15) and the second tubular shaft (23), for operating the second locking means (15).

2. A transmission device (1) according to claim 1, whereby at least one of the locking means (14, 15) is so arranged as to surround the mainshaft (5) and be movable relative to the mainshaft (5) between a first position in which the locking means (14, 15) is connected to the primary gearwheel (10, 12) which the locking means (14, 15) is adapted to locking to/unlocking from the mainshaft (5) and a second position in which the locking means (14, 15) is only connected to the mainshaft (5).

3. A transmission device (1) according to claim 2, whereby each of said locking means (14, 15) surrounding said mainshaft (5) comprises a rotationally symmetrical groove (25, 26) arranged concentrically with the mainshaft.

4. A transmission device (1) according to claim 3, whereby each of the connecting means (22, 24) has a fork-shaped end portion (34) which engages with the rotationally symmetrical groove (25, 26) on the locking means (14, 15) to which the connecting means (22, 24) is connected.

5. A transmission device (1) according to any one of the foregoing claims, whereby the first connecting means (22) is firmly arranged in the first tubular shaft (21) and whereby the second connecting means (24) is firmly arranged in the second tubular shaft (23).

6. A transmission device (1) according to any one of the foregoing claims, whereby the mainshaft (5) and the countershaft (16) are arranged substantially parallel with one another.

7. A transmission device (1) according to any one of the foregoing claims, whereby the mainshaft (5) and the gearshift shaft (31) are arranged substantially parallel with one another.

8. A transmission device (1) according to any one of the foregoing claims, whereby the first tubular shaft (21) has a greater extent along the longitudinal axis of the gearshift shaft (31) than the second tubular shaft (23).

9. A transmission device (1) according to any one of the foregoing claims, comprising a first actuating means (27) adapted to moving the first tubular shaft (21) and a second actuating means (28) adapted to moving the second tubular shaft (23).

10. A transmission device (1) according to claim 9, whereby the actuating means (27, 28) are selected from the group comprising electrical actuating means, pneumatic actuating means, electromagnetic actuating means and hydraulic actuating means.

11. A transmission device (1) according to any one of the foregoing claims, comprising a mechanical transmission unit adapted to transmitting the motion of the tubular shafts (21, 23) to a control means (39) arranged on the outside of the transmission device (1).

12. A transmission device (1) according to any one of the foregoing claims, whereby the mainshaft (5) comprises an input shaft (6) with at least one input gearwheel (8) meshing with a countershaft gearwheel (9) on the countershaft (16), and a primary shaft (7) on which primary gearwheels (10, 12) are arranged.

13. A transmission device (1) according to any one of the foregoing claims, whereby the endwalls (3, 4) take the form of separate parts from the casing (2) and whereby the transmission device (1) comprises a fastening means (31, 32) adapted to acting upon the distal surfaces of the endwalls (3, 4) with a force relative to one another inwards towards the casing.

14. A transmission device (1) according to claim 13, whereby the gearshift shaft (31) takes the form of said fastening means (31, 32).

15. A transmission device (1) according to any one of the foregoing claims, comprising plain bearings (33) arranged on the inside of the tubular shafts (21, 23).

16. A motor vehicle (101) comprising a transmission device (1) according to any one of the foregoing claims.

## Patentansprüche

1. Getriebe (1) für ein Kraftfahrzeug (101) aufweisend:
ein Gehäuse (2), eine erste Endwand (3) und eine zweite Endwand (4),
eine Hauptwelle (5), die in den Endwänden (3, 4) gelagert ist und durch wenigstens eine der Endwände (3, 4) hindurch verläuft, wobei auf der Hauptwelle (5) ein erstes primäres Getrieberad (10) und ein drittes primäres Getrieberad (12) angeordnet sind,
ein erstes Verriegelungsmittel (14), das zum Verriegeln des ersten primären Getrieberads (10) relativ zu der Hauptwelle (5) ausgelegt ist,
ein zweites Verriegelungsmittel (15), das zum Verriegeln des dritten primären Getrieberads (12) relativ zu der Hauptwelle (5) ausgelegt ist,
eine Zwischenwelle (16), die in den Endwänden gelagert ist und auf der wenigstens ein erstes Zwischenwellengetrieberad (17), das mit dem ersten primären Getrieberad (10) in Eingriff steht, und ein drittes Zwischenwellengetrieberad (19), das mit dem dritten primären Getrieberad (12) in Eingriff steht, angeordnet sind,
eine Gangschaltvorrichtung zum Betätigen des ersten Verriegelungsmittels (14) und des zweiten Verriegelungsmittels (15),
wobei das Getriebe wenigstens eine Gangschaltwelle (31) aufweist und die Gangschaltvorrichtung wenigstens eine erste rohrförmige Welle (21) umfasst, die so angeordnet ist, dass sie die Gangschaltwelle umgibt und entlang der Gangschaltwelle (31) verlagerbar ist, und ein erstes Verbindungsmittel (22), das zwischen dem ersten Verriegelungsmittel (14) und der ersten rohrförmigen Welle zum Betätigen des ersten Verriegelungsmittels (14) angeordnet ist,
**gekennzeichnet durch** eine zweite rohrförmige Welle (23), die so angeordnet ist, dass sie die erste rohrförmige Welle (21) umgibt und relativ zu der ersten rohrförmigen Welle (21) und der Gangschaltwelle (31) entlang der Gangschaltwelle (31) verlagerbar angeordnet ist, und ein zweites Verbindungsmittel (24), das zum Betätigen des zweiten Verriegelungsmittels (15) zwischen dem zweiten Verriegelungsmittel (15) und der zweiten rohrförmigen Welle (23) angeordnet ist.

2. Getriebe (1) nach Anspruch 1, wobei wenigstens eines der Verriegelungsmittel (14, 15) derart angeordnet ist, dass es die Hauptwelle (5) umgibt und relativ zu der Hauptwelle (5) zwischen einer ersten Position, in der das Verriegelungsmittel (14, 15) mit dem primären Getrieberad (10, 12) verbunden ist, zu dessen Entriegelung oder Verriegelung von der Hauptwelle (5) das Verriegelungsmittel (14, 15) ausgelegt ist, und einer zweiten Position verlagerbar ist, in der das Verriegelungsmittel (14, 15) nur mit der Hauptwelle (5) verbunden ist.

3. Getriebe (1) nach Anspruch 2, wobei jedes der die Hauptwelle (5) umgebenden Verriegelungsmittel (14, 15) eine rotationssymmetrische Nut (25, 26) aufweist, die konzentrisch zu der Hauptwelle angeordnet ist.

4. Getriebe (1) nach Anspruch 3, wobei jedes der Verbindungsmittel einen gabelförmigen Endabschnitt (34) aufweist, der in die rotationssymmetrische Nut (25, 26) der Verriegelungsmittel (14, 15) eingreift, mit denen die Verbindungsmittel (22, 24) verbunden sind.

5. Getriebe (1) nach einem der vorangehenden Ansprüche, wobei das erste Verbindungsmittel (22) fest in der ersten rohrförmigen Welle (21) angeordnet ist, und wobei das zweite Verbindungsmittel (24) fest in der zweiten rohrförmigen Welle (23) angeordnet ist.

6. Getriebe (1) nach einem der vorangehenden Ansprüche, wobei die Hauptwelle (5) und die Zwischenwelle (16) im Wesentlichen parallel zueinander angeordnet sind.

7. Getriebe (1) nach einem der vorangehenden Ansprüche, wobei die Hauptwelle (5) und die Gangschaltwelle (31) im Wesentlichen parallel zueinander angeordnet sind.

8. Getriebe (1) nach einem der vorangehenden Ansprüche, wobei die Erstreckung der ersten rohrförmigen Welle (21) entlang der Längsachse der Gangschaltwelle (31) größer ist, als die der zweiten rohrförmigen Welle (23).

9. Getriebe (1) nach einem der vorangehenden Ansprüche aufweisend ein erstes Betätigungsmittel (27), das zum Bewegen der ersten rohrförmigen Welle (21) ausgelegt ist, und ein zweites Betätigungsmittel (28), das zum Bewegen der zweiten rohrförmigen Welle (23) ausgelegt ist.

10. Getriebe (1) nach Anspruch 9, wobei die Betätigungsmittel (27, 28) aus einer Gruppe von elektrischen Betätigungsmitteln, pneumatischen Betätigungsmitteln, elektromagnetischen Betätigungsmitteln und hydraulischen Betätigungsmitteln ausgewählt sind.

11. Getriebe (1) nach einem der vorangehenden Ansprüche aufweisend eine mechanische Übertragungseinheit, die zum Übertragen der Bewegung der rohrförmigen Wellen (21, 23) zu einem Steuermittel (39) ausgelegt ist, das an einer Außenseite des Getriebes (1) angeordnet ist.

12. Getriebe (1) nach einem der vorangehenden Ansprüche, wobei die Hauptwelle (5) eine Eingangswelle (6) mit wenigstens einem Eingangszahnrad (8), das mit einem Zwischenwellengetrieberad (9) auf der Zwischenwelle (16) in Eingriff steht, und eine Primärwelle (7) aufweist, auf der die primären Getrieberäder (10, 12) angeordnet sind.

13. Getriebe (1) nach einem der vorangehenden Ansprüche, wobei die Endwände (3, 4) als von dem Gehäuse (2) separate Teile ausgebildet sind, und wobei das Getriebe (1) ein Befestigungsmittel (31, 32) aufweist, das dazu augelegt ist, um auf die distalen Flächen der Endwände (3, 4) mit einer Kraft einzuwirken, die relativ zueinander einwärts auf das Gehäuse gerichtet ist.

14. Getriebe (1) nach Anspruch 13, wobei die Gangschaltwelle (31) in Form der Befestigungsmittel (31, 32) ausgebildet ist.

15. Getriebe (1) nach einem der vorangehenden Ansprüche, aufweisend Wälzlager (33), die an der Innenseite der rohrförmigen Wellen (21, 23) angeordnet sind.

16. Kraftfahrzeug (101) mit einem Getriebe (1) nach einem der vorangehenden Ansprüche.

## Revendications

1. Dispositif de transmission (1) destiné à un véhicule à moteur (101), comprenant :
un carter (2), une première paroi d'extrémité (3) et une seconde paroi d'extrémité (4),
un arbre principal (5) soutenu dans les parois d'extrémité (3, 4), qui circule à travers au moins une des parois d'extrémité (3, 4) et sur lequel un premier engrenage primaire (10) et un troisième engrenage primaire (12) sont agencés,
un premier moyen de verrouillage (14) conçu pour verrouiller le premier engrenage primaire (10) par rapport à l'arbre principal (5),
un deuxième moyen de verrouillage (15) conçu pour verrouiller le troisième engrenage primaire (12) par rapport à l'arbre principal (5),
un arbre de renvoi (16) qui est soutenu dans les parois d'extrémité et sur lequel au moins un premier engrenage d'arbre de renvoi (17) s'emboîtant dans le premier engrenage primaire (10), et un troisième engrenage d'arbre de renvoi (19) s'emboîtant dans le troisième arbre primaire (12) sont agencés,
un dispositif de changement de vitesse destiné à actionner le premier moyen de verrouillage (14) et le deuxième moyen de verrouillage (15),
dans lequel le dispositif de transmission comprend un arbre de changement de vitesse (31) et le dispositif de changement de vitesse comprend au moins
un premier arbre tubulaire (21) agencé de manière à entourer l'arbre de changement de vitesse et à être mobile le long de l'arbre de changement de vitesse (31), et un premier moyen de raccordement (22), agencé entre le premier moyen de verrouillage (14) et le premier arbre tubulaire (21), pour actionner le premier moyen de verrouillage (14), **caractérisé par**
un deuxième arbre tubulaire (23) agencé de manière à renfermer le premier arbre tubulaire (21) et à être mobile le long de l'arbre de changement de vitesse (31) par rapport au premier arbre tubulaire (21) et à l'arbre de changement de vitesse (31), et un deuxième moyen de raccordement (24), agencé entre le deuxième moyen de verrouillage (15) et le deuxième arbre tubulaire (23), pour actionner le deuxième moyen de verrouillage (15).

2. Dispositif de transmission (1) selon la revendication 1, dans lequel au moins un des moyens de verrouillage (14, 15) est agencé de manière à entourer l'arbre principal (5) et à être mobile par rapport à l'arbre principal (5) entre une première position dans laquelle le moyen de verrouillage (14, 15) est raccordé à l'engrenage primaire (10, 12) que le moyen de verrouillage (14, 15) est conçu pour verrouiller à / déverrouiller de l'arbre principal (5) et une seconde position dans laquelle le moyen de verrouillage (14, 15) est seulement raccordé à l'arbre principal (5).

3. Dispositif de transmission (1) selon la revendication 2, dans lequel chacun desdits moyens de verrouillage (14, 15) entourant ledit arbre principal (5) comprend une rainure symétrique d'un point de vue rotatif (25, 26) agencée de manière concentrique par rapport à l'arbre principal.

4. Dispositif de transmission (1) selon la revendication 3, dans lequel chacun des moyens de raccordement (22, 24) présente une partie d'extrémité en forme de fourche (34) qui vient en prise avec la rainure symétrique d'un point de vue rotatif (25, 26) sur les moyens de verrouillage (14, 15) auxquels les moyens de raccordement (22, 24) sont raccordés.

5. Dispositif de transmission (1) selon l'une quelconque des revendications précédentes, dans lequel le premier moyen de raccordement (22) est fermement agencé dans le premier arbre tubulaire (21) et dans lequel le second moyen de raccordement (24) est fermement agencé dans le second arbre tubulaire (23).

6. Dispositif de transmission (1) selon l'une quelconque des revendications précédentes, dans lequel l'arbre principal (5) et l'arbre de renvoi (16) sont agencés sensiblement parallèlement l'un par rapport à l'autre.

7. Dispositif de transmission (1) selon l'une quelconque des revendications précédentes, dans lequel l'arbre principal (5) et l'arbre de changement de vitesse (31) sont agencés sensiblement parallèlement l'un par rapport à l'autre.

8. Dispositif de transmission (1) selon l'une quelconque des revendications précédentes, dans lequel le premier arbre tubulaire (21) a une plus grande longueur le long de l'axe longitudinal de l'arbre de changement de vitesse (31) que le second arbre tubulaire (23).

9. Dispositif de transmission (1) selon l'une quelconque des revendications précédentes, comprenant un premier moyen d'actionnement (27) conçu pour entraîner en mouvement le premier arbre tubulaire (21) et un second moyen d'actionnement (28) conçu pour entraîner en mouvement le second arbre tubulaire (23).

10. Dispositif de transmission (1) selon la revendication 9, dans lequel les moyens d'actionnement (27, 28) sont sélectionnés dans le groupe comprenant les moyens d'actionnement électrique, les moyens d'actionnement pneumatique, les moyens d'actionnement électromagnétique et les moyens d'actionnement hydraulique.

11. Dispositif de transmission (1) selon l'une quelconque des revendications précédentes, comprenant une unité de transmission mécanique conçue pour transmettre le mouvement des arbres tubulaires (21, 23) à un moyen de commande (39) agencé à l'extérieur du dispositif de transmission (1).

12. Dispositif de transmission (1) selon l'une quelconque des revendications précédentes, dans lequel l'arbre principal (5) comprend un arbre d'entrée (6) comportant au moins un engrenage d'entrée (8) s'emboîtant dans un engrenage d'arbre de renvoi (9) sur l'arbre de renvoi (16), et un arbre primaire (7) sur lequel les engrenages primaires (10, 12) sont agencés.

13. Dispositif de transmission (1) selon l'une quelconque des revendications précédentes, dans lequel les parois d'extrémité (3, 4) revêtent la forme de parties séparées du carter (2) et dans lequel le dispositif de transmission (1) comprend des moyens de fixation (31, 32) conçus pour agir sur les surfaces distales des parois d'extrémité (3, 4) avec une force l'un par rapport à l'autre dirigée vers l'intérieur en direction du carter.

14. Dispositif de transmission (1) selon la revendication 13, dans lequel l'arbre de changement de vitesse (31) revêt la forme desdits moyens de fixation (31, 32).

15. Dispositif de transmission (1) selon l'une quelconque des revendications précédentes, comprenant des paliers lisses (33) agencés à l'intérieur des arbres tubulaires (21, 23).

16. Véhicule à moteur (101) comprenant un dispositif de transmission (1) selon l'une quelconque des revendications précédentes.
